# EUROPEAN PATENT APPLICATION

(11) **EP 4 793 594 A1**
(43) Date of publication of application: **19.08.2026**
(21) Application number: 25222178.3
(22) Date of filing: 10.12.2025
(51) Int. Cl.: G01B 11/10, B65H 18/20

(54) **WINDER WITH A DIAMETER PROFILE MEASURING SYSTEM AND A DIAMETER PROFILE MEASURING METHOD**

(30) Priority: 18.02.2025 FI 20255140
(71) Applicant: Valmet Technologies Oy, 02150 Espoo (FI)
(72) Inventor: AHRAPALO, Jyri, 04400 Järvenpää (FI); HAAPANEN, Jaakko, 01370 Vantaa (FI); KÄÄRIÄINEN, Marko, 01370 Vantaa (FI); LESKINEN, Arto, 04400 Järvenpää (FI); RATILAINEN, Tuomas, 01370 Vantaa (FI); VIRTA, Henry, 01370 Vantaa (FI)
(74) Representative: Berggren Oy

(57) **Abstract**

The invention relates to a winder with a diameter profile measuring system, which winder (10) is a winder (10) of a slitter-winder and configured to wind customer rolls (15) as sets of customer rolls (15), which winder (10) comprises two winding drums (11, 12), on support of which the customer rolls (15) are configured to be wound, and a rider roll (17) supported by a rider roll beam (18), which rider roll (17) is configured to support the customer rolls (15) during winding thereof from above, and which rider roll (17) and rider roll beam (18) are arranged to be movable in vertical direction. The rider roll beam (18) comprises a linear guide located on its longitudinal side, the diameter profile measuring system comprises a diameter profile measuring device (20) supported by a carriage (22), the measuring device (20) is movably supported by the carriage (22) on the linear guide (21), the diameter profile measuring device (20) comprises a measuring laser sensor and the measuring laser sensor is turnably by a turnable attachment arrangement attached to the carriage (22) for calibration measurement of the measuring laser sensor. The invention also relates to a diameter profile measuring method for measurement of diameter profile of a set of customer rolls wound in a winder of a slitter-winder.

## Description

### Technical field

The invention relates generally to production of fiber webs and to slitting and winding of fiber webs into customer rolls, especially by a slitter-winder for fiber webs. The invention relates to a winder with a diameter profile measuring system according to the preamble part of the independent winder with a diameter profile measuring system claim and to a diameter profile measuring method according to the preamble part of the independent diameter profile measuring method claim.

### Background

As known, fiber webs, such as paper or board webs, are manufactured in machines together forming a fiber web manufacturing line, which may be hundreds of meters long. Modern paper machines may produce more than 450,000 tons of paper per year. The speed of a paper machine may exceed 2000 m/min and the width of a paper web may be more than 11 meters.

As known from the prior art in fiber web producing processes typically comprise an assembly formed by a number of apparatuses arranged consecutively in the process line. A typical production and treatment line comprises a head box, a wire section and a press section as well as a subsequent drying section and a reeler or a winder. The production and treatment line can further comprise finishing devices, for example a sizer and /or a calender and / or a coater. The production and treatment line also comprises typically at least one slitter-winder for forming customer rolls as well as a roll packaging apparatus.

In fiber web production lines, manufacturing operates as a continuous process. The finished fiber web being output from the machine is wound with a reeler or a winder around a reeling shaft, i.e. a reel spool, into a parent roll (a machine roll), the diameter of which may be more than 5 meters and which may weigh more than 160 tons. The purpose of the reeling is to transfer the fiber web from its planar manufacturing form into a form in which it can be handled more easily. At the reeler, which is located in the main production line, the continuous process of the production line is interrupted for the first time, after which the process continues in stages. Every attempt is made to interlink these stages as smoothly as possible so that the work already performed would not be wasted. Reelers are thus used in fiber web production for reeling the fiber web coming from the fiber web production line into a parent roll, but reelers are also used to reel fiber web coming from a coating machine, a calender or a corresponding finishing device.

The fiber web wound in the reel-up onto the parent roll is full-width so it must be slit in longitudinal direction into partial webs with suitable width and the partial webs are wound to partial fiber web rolls (customer rolls) with suitable length of fiber web and/or of suitable diameter for the customers. The slitting and winding take place as known from prior art in an appropriate separate machine i.e. in a slitter-winder. Slitter-winders comprise an unwinder, in which the parent roll is unwound, a slitting section, in which from the parent roll unwound fiber web is slitted, i.e. cut in longitudinal direction, to partial webs with desired widths, and a winding section for winding the customer rolls. In winding sections of slitter-winders winding devices of different types are employed, for example multistation winders and two-drum winders. As known in the prior art, also winding with a shaft without cores or together with cores can be employed in the winding of a fiber web into customer rolls on a slitter-winder. On slitter-winders of the multistation winder type, the fiber web is guided from the unwinding via guide rolls to the slitting section where the fiber web is slit into partial webs which are further guided either from above or from below to the winding roll/rolls of the winding stations to be wound up onto cores into customer rolls. Adjacent partial webs are wound up on different sides of the winding roll / on different winding rolls. Multistation winders have one to three winding rolls and in them each partial web is wound to a partial web roll in its own winding station. During winding a winding nip is formed between the winding roll and the partial web rolls to be wound. In the two-drum winders the partial webs are wound around winding cores supported by two winding drums to customer rolls via a nip between the winding drums and the customer being formed. In the two-drum winders also a belt arrangement i.e. a so-called set of belt rolls with belt loop or belt loops located around two guide rolls can be used as the winding drum. During winding a winding nip is formed between the winding drums and the customer rolls wound. In the two drum winders typically also a rider roll is used to support the customer rolls in winding from above. The rider roll is supported by a rider roll beam, which is arranged to be movable typically in vertical direction to be in contact with the customer rolls during winding and to be correspondingly moved upwards as the diameter of the customer rolls increases.

As known from the prior art, in the slitter-winder the parent roll is unwound in an unwinding section in at least one unwinder, the full-width fiber web is slit in longitudinal direction on the slitting section into several narrower partial fiber webs (partial webs), which are wound up on a winding section around winding cores into customer rolls as sets. In the slitter-winder when the customer rolls reach desired length and diameter, a set change is performed, in which the rider roll is removed from the contact with the customer rolls and the partial webs are cut in cross-direction. Tails of the partial webs i.e. trailing ends of the cut partial webs are attached onto the surface of the fiber webs on the surface of customer rolls in the set change by applying onto the surface of the fiber web running towards the customer rolls adhesive, which then attaches the tails onto the surface of the customer rolls. When the customer rolls are completed, in the slitter-winder in the set change the complete customer rolls i.e. the so-called set is removed from the winder and new cores for winding the next set of the customer rolls are set to the winder onto support of the winding drums and the beginning ends of the cut partial webs are attached onto the new cores, and the rider roll is moved to support the customer rolls to be wound, after which the process is continued with the winding of the next set of the customer rolls. These stages are repeated periodically until paper runs out of the parent roll in the unwinder, whereby a parent roll change is performed and the operation starts again as the unwinding of a next parent roll and forming the customer rolls in sets.

One important factor effecting runnability of a slitter-winder is diameter profile of a set of customer rolls. Sometimes profile in cross-direction of the fiber web of a full-width fiber web produced by a fiber web production line is such, that in winding a set of customer rolls diameters of the customer rolls differ from each other, even significantly, which causes that the customer rolls of the set are all not in contact with the rider roll of the two drum winder and also, customer rolls with different diameters have different angular speeds. These may cause severe vibration. Vibration phenomenon may cause problems in winders, even a 1 mm difference in diameters of the customer rolls may cause vibration and/or have an effect to runnability of the winder. The vibration causes winding reject, mechanical wear of the parts and element of the slitter-winder, even loosening of the customer rolls from the winder as well as decrease of winding capacity as the running speed has to be lowered. The vibration phenomenon thus, often limits the maximum speed utilizable in the winding and therefore decreases capacity of the slitter-winder. In the worst case, the vibration phenomenon can cause the out-throwing of the set of the customer rolls from the winder. Additionally, web breaks may occur due to the vibration phenomenon.

It is known from prior art that sometimes hardness measurement has been used to define a diameter profile of a set of customer rolls, as a correlation between the hardness and the diameter profile of the set of the customer rolls exits. In WO patent application publication 2010028867A1 is disclosed one example of this type of an arrangement. In practice, this arrangement is seldomly used due to its relative high costs.

In FI utility model publication 13651Y1 is disclosed a slitter-winder, which comprises a slitting section for slitting a fiber web in longitudinal direction of the fiber web into partial webs, a spreading device for separating the partial webs in lateral direction such, that a distance is formed between adjacent partial webs, a winding section for winding the partial webs into customer rolls comprising at least one winding drum for supporting and winding the customer rolls by a winding nip formed between the winding drum and the customer rolls during winding. The slitter-winder further comprises a traversable measuring device/-s located after the spreading device in running direction of the partial webs for measuring distance between adjacent partial webs and/or gaps between adjacent customer rolls, a spreading adjustment actuator/-s for adjusting the spreading/separating effect of the spreading device and a controller configured to receive measurement result/-s from the traversable measuring device/-s and to automatically control the spreading adjustment actuator/-s. The measuring device/-s for measuring the gaps between the customer rolls can be attached to a rider roll or to a rider roll beam of the winder. This/these measuring device/-s can also provide information of widths of the customer rolls and of their positions on the winding drums and of diameter profile of a set of customer rolls. In this arrangement measurement information can be provided to a controller connected to a control unit of a slitter-winder. In practice this type measuring device has not been used to measure diameter profiles of a set of customer rolls due to difficulties in calibrating the measurement such, that reliable results are provided. Furthermore, it should be noted that by controlling the slitter-winder not significant effect to diameter profile of a set of customer rolls can be provided.

Therefore there exists a need for diameter profile measurement in connection with winders of slitter-winders to provide measurement information in regard of diameter profiles of sets of customer rolls to the fiber web production line for controlling the production of the fiber web such, that unevenness in cross-directional profile of the fiber web can be eliminated or at least minimized such, that differences in diameters of customer rolls of a set of customer rolls can be avoided or at least minimized.

An object of the present invention is to create a diameter profile measuring system and a diameter profile measuring method, in which the above problems and disadvantages are eliminated or at least minimized.

A particular object of the present invention is to an improved diameter profile measuring system and an improved diameter profile measuring method, by which reliable results are achieved and necessary back feed information to a fiber web production line can be provided.

### Summary

To achieve the above-mentioned objects and those which come out later, the winder with a diameter profile measuring system according to the invention is mainly characterized by what is presented in the characterizing part of the independent winder with a diameter profile measuring system claim and the diameter profile measuring method according to the invention is mainly characterized by what is presented in the characterizing part of the independent diameter profile measuring method claim. Advantageous features and embodiments of the invention are defined in the claims.

According to the invention the winder with a diameter profile measuring system is a winder of a slitter-winder and configured to wind customer rolls as sets of customer rolls, which winder comprises two winding drums, on support of which the customer rolls are configured to be wound, and a rider roll supported by a rider roll beam, which rider roll is configured to support the customer rolls during winding thereof from above, and which rider roll and rider roll beam are arranged to be movable in vertical direction, wherein the rider roll beam comprises a linear guide located on its longitudinal side, the diameter profile measuring system comprises a diameter profile measuring device supported by a carriage, the measuring device is movably supported by the carriage on the linear guide, the diameter profile measuring device comprises a measuring laser sensor and the measuring laser sensor is turnably by a turnable attachment arrangement attached to the carriage for calibration measurement of the measuring laser sensor.

According to an advantageous feature of the invention the measuring device has a measurement movement, in which the measuring device is configured to be moved on the linear guide in cross-direction of the winder and during which the measuring laser sensor of the measuring device is configured to measure distance to outer peripheral surface of the customer rolls to define the diameter profile of the set of the customer rolls supported by the winding drums.

According to an advantageous feature of the invention the diameter profile measurement information received from the measuring laser sensor is configured to be calibrated on basis of a calibration distance measurement information of a distance to at least one of the winding drums.

According to an advantageous feature of the invention the measuring system comprises an actuator for moving the measuring device.

According to an advantageous feature of the invention the measuring system comprises a charging position with a charging device for charging the measurement device.

According to an advantageous feature of the invention the measurement device of the measuring system is in data transmission connection with a slitter-winder control system.

According to an advantageous feature of the invention the slitter-winder control system is in data transmission connection with a production line control unit of a fiber web production line, in connection of which the winder is arranged, and configured to provide back feed information to the production line control unit on basis of the measured diameter profile information received from the measuring device.

According to an advantageous feature of the invention the measuring device is wireless.

According to the invention the diameter profile measuring method for measurement of diameter profile of a set of customer rolls wound in a winder of a slitter-winder, which winder sets of customer rolls are wound on support of winding drums of the winder, and in which winder a set of customer rolls is supported from above by a rider roll supported by a rider roll beam, whereby in the diameter profile measuring method a diameter profile is measured by a diameter profile measuring device during measurement movement of the diameter profile measuring device provided by a carriage movably supported on a linear guide arranged on one longitudinal side of the rider roll beam, the diameter profile measuring device measures the diameter profile of a set of customer rolls by a measuring laser sensor, which is turnably by a turnable attachment arrangement attached to the carriage for calibration measurement of the measuring laser sensor.

According to an advantageous feature of the invention the diameter profile measuring is performed when the winder is slowing down or stopped.

According to an advantageous feature of the invention the diameter profile measuring is performed when the winder is for set change slowing down or stopped.

According to an advantageous feature of the invention the measuring laser sensor is turned for the calibration distance measurement of measuring distance to at least one of the winding drums by the measuring laser sensor.

According to an advantageous feature of the invention the method the measuring device is charged in a charging position by a charging device.

According to an advantageous feature of the invention in the method the measurement result of the diameter profile measurement by the measuring device is transmitted to a slitter-winder control system for transmitting the measurement result as back feed information to a production line control unit of a fiber web production line providing fiber web for the winder.

The present invention provides a novel and inventive diameter profile measurement in connection with a slitter-winder. By the diameter profile measuring system and the diameter profile measuring system according to the invention the diameter profile of a set of customer rolls wound in a winder of a slitter-winder is measured reliably and thus, the diameter profile measurement results can be used as back feed information in the fiber web production line.

It has been surprisingly noted that the measuring device of the diameter profile measuring system and for the diameter profile method for measuring the diameter profile of a set of customer rolls wound provides reliable information in regard of the diameter profile of a set of customer rolls, as the measurement results are received from the traversing measuring device provided with a turnable laser sensor, which turnability provides setting the laser sensor of the measurement device to a calibration measurement position. Thus, the laser sensor of the measurement device comprises two main positions: diameter profile measurement position and calibration measurement position. In the diameter profile measurement is measured distance to the outer surfaces of the customer rolls and in the calibration measurement is measured distance to at least one of the winding drums.

It has been surprisingly noted that the measuring device of the diameter profile measuring system and for the diameter profile method for measuring the diameter profile of a set of customer rolls wound in a two drum winder of a slitter-winder, which measuring device is arranged as a traversing measuring device attached to a rider roll beam of the respective two drum winder, is advantageously calibrated by measuring the position of the measurement laser sensor in respect of position of at least one of the winding drums and calibrating the measurement information of the diameter profile on basis of this calibrating measurement result. Advantageously, for the calibration the position of the measurement laser sensor is measured in respect of each of the winding drums for positioning the measurement laser sensor advantageously in vertical and in machine direction (in the main running direction of the slitter-winder). Advantageously based on the calibrating measurement results a correction factor for the diameter profile measurement result of a set of the customer rolls is defined. Further, it has surprisingly found out that by providing the measurement laser sensor of the measuring device with the turnable attachment arrangement to the rider roll beam, the calibration measurement can be performed on basis of the distance to at least one of the winding drums and thus, the correction factor for the measurement laser sensor diameter profile measurement results can be defined for reliable, calibrated diameter profile measurement information. The turnable attachment arrangement can be arranged for example by a turning link or by an adjustable screw fastening. The turned calibration position of the laser sensor is defined on basis of geometry of the winder.

According to an advantageous aspect of the invention in the diameter profile measuring device the measuring laser sensor has an accuracy of +/- 0,2 mm. It should be noted that mounting movably a sensor with this accuracy onto a carriage movably on a guide arranged on the rider roll beam is a challenge, in which the accuracy may easily be lost. Thus, the measuring laser sensor turnably by the turnable attachment arrangement attached to the carriage for calibration measurement of the measuring laser sensor provides accuracy of at least +/- 0,5 mm. Especially, the calibration measurement as the distance measurement to at least one of the winding drums provides a very accurate calibration due to the accurate machining of the surface of the winding drums. Further advantageously, the diameter profile measurement results received are transmitted by a transmission unit wirelessly to a control system of a fiber web production line, in connection of which the slitter-winder is located, and/or to a part thereof to provide diameter profile information for controlling the fiber web production such, that a fiber web with improved profile such, that the diameter profile of a set of customer roll is substantially even and thus, the rider roll supports the customer rolls of the set during winding evenly and the harmful vibration effect is eliminated of at least minimized.

According to an advantageous aspect of the invention in a two drum winder provided with a rider roll supported by a rider roll beam on support structures of the two drum winder, the rider roll beam comprises a horizontal guide on one longitudinal side thereof, i.e. cross-direction extending side in respect of the main running direction of the fiber webs, i.e. in axis direction of the customer rolls of the set wound in the winder, and to the horizontal guide a traversing measuring device is movably attached in the horizontal direction. The traversable measuring device comprises a measuring laser sensor configured to measure the distance from the surface of each of the customer rolls in the set to provide diameter profile information of the diameters of the customer rolls of the set. The measuring is advantageously performed after a set of customer rolls is completed, when the rider roll has been removed upwards from the contact with the surface of the customer rolls. The measuring is alternatively advantageously performed just before a set of customer rolls is completed, when the rider roll is still the contact with the surface of the customer rolls. These alternatives provide that the measuring can be performed without taking off capacity of the slitter-winder. The measuring laser sensor is calibrated by measuring the position of the measurement laser sensor in respect of position of at least one of the winding drums and calibrating the measurement results on basis of this calibrating measurement result. Advantageously, for the calibration the position of the measurement laser sensor is measured in respect of each of the winding drums.

According to an advantageous aspect of the invention the measuring device of the diameter profile measuring system and for the diameter profile method for measuring the diameter profile of a set of customer rolls wound in a two drum winder of a slitter-winder is automatically controlled.

According to an advantageous aspect of the invention the measuring device of the diameter profile measuring system and for the diameter profile method for measuring the diameter profile of a set of customer rolls wound in a two drum winder of a slitter-winder is integrated to the slitter-winder.

According to an advantageous aspect of the invention the measuring device of the diameter profile measuring system and for the diameter profile method for measuring the diameter profile of a set of customer rolls wound in a two drum winder of a slitter-winder can additionally perform measurements of gaps between the adjacent customer rolls in a set of customer rolls and widths of customer rolls in a set of customer rolls.

According to an advantageous aspect of the invention the measuring device has a charging position with a charging device, in which the measuring device is charged during its rest times, if needed, such, that continuous operation is provided and the measuring device will be continuously powered for measurement movement and thus, always available for the measurement of the diameter profile at its measuring times.

According to an advantageous aspect of the invention based on the diameter profile measurement result information, the back feed information to the control of the fiber web production line, effects corrective operations in the fiber web production to provide more even full-width fiber web profile. These corrective operations may be for example adjustment of suspension feed from the headbox in cross-direction, adjustment of cross-directional loading profiles in the press-section, adjusting at least one steam box effect in cross-direction, adjustment of temperature profile of at least one calender roll in cross-direction or adjusting moisture devices in cross-direction.

According to an advantageous aspect of the invention based on the diameter profile measurement result information, the back feed information to the control of the slitter-winder, effects corrective operations to avoid vibration and/or to in to provide more even diameter profile for a set of customer rolls.

By the invention and its advantageous features many advantages are achieved: reliable measuring information in regard of the diameter profile of a set of customer rolls is provided and the measuring information can be provided as back feed information to the control of the fiber web production line to improve the profile of the fiber web such, that evenness of the diameter profile of sets of customer rolls wound in the winder of the slitter-winder is improved and thus, harmful vibrations can be avoided and the runnability of the slitter-winder is improved. The accurate calibration provides for even +/-0,5 mm accuracy of the diameter profile information.

### Brief description of the drawings

Aspects and features of the invention, however, together with additional objects and advantages thereof, will be best understood from the following description of some example embodiments when read in connection with the accompanying drawings. In the following the invention is described in more detail referring to the accompanying drawing, in which
In figure 1 is schematically shown an advantageous example of a winder or a slitter-winder with a diameter profile measuring system for the diameter profile measuring method,
In figure 2 is schematically shown an advantageous example of part of the winder of the slitter-winder with the diameter profile measuring system for the diameter profile measuring method as a 3D view,
In figure 3 is schematically shown an advantageous example of a diameter profile measuring device for the diameter profile measuring system and
In figure 4 is schematically shown an advantageous example of a control system of a diameter profile measuring device for the diameter profile measuring system.

### Detailed description

In the following description same reference signs designate for similar components unless otherwise mentioned and it should be understood that the examples are susceptible of modification in order to adapt to different usages and conditions within the frames of the invention. Repetition of some reference signs may have been omitted in the figures for clarity reasons.

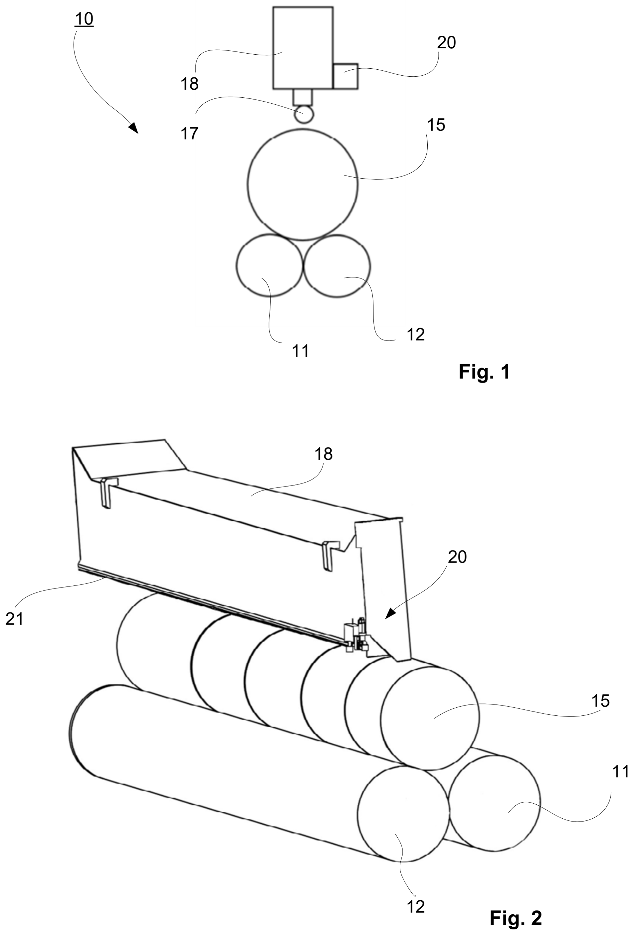

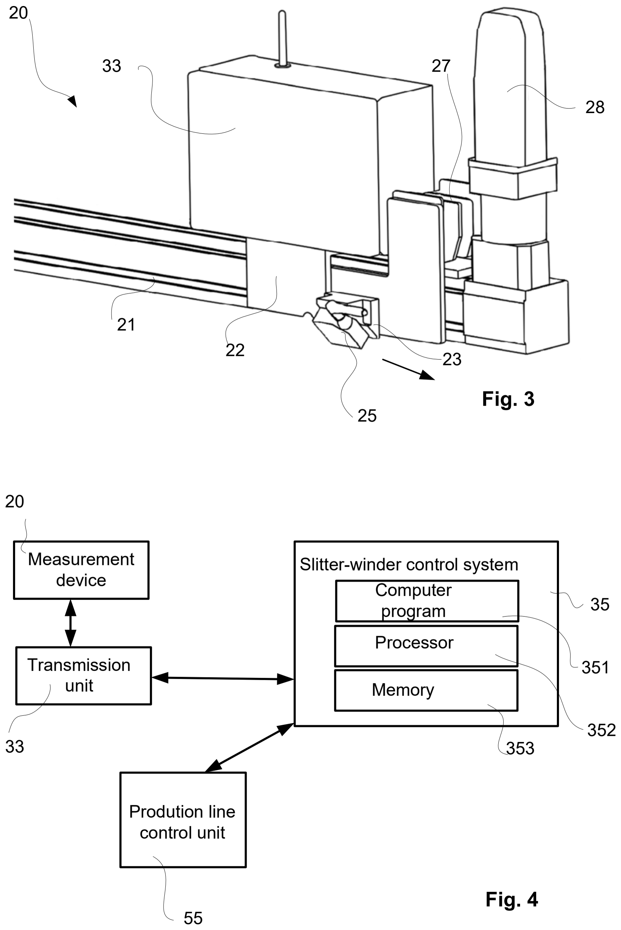

In figure 1 is shown an example of the diameter profile measuring system for the diameter profile measuring method in connection with a winder 10 of a slitter-winder, which comprises typically also an unwinder and a slitting section located before the winder 10 in running direction of the slitter-winder i.e. in running direction of a fiber web / slitted partial fiber webs in the slitter-winder. In the slitting section the full-width fiber web unwound by the unwinder is guided into slitting between slitter blades, which slitter blades slit the full-width fiber web in longitudinal direction of the fiber web into the partial fiber webs (partial webs). After slitting the partial webs are guided for winding in the winder 10 on support of winding drums 11, 12 to customer rolls 15 that are located axially next to each other into a longitudinal set of customer rolls in cross-direction. The customer rolls 15 spaced apart such that a gap is provided between two adjacent customer rolls 15. As shown in the figure 1 the slitter-winder also comprises a rider roll 17 supported by a rider roll beam 18 for supporting the customer rolls 15 during the winding in the winder 10 from above. The rider roll 17 and the rider roll beam 18 are moved in vertical direction, in the beginning of a new set of customer rolls 15 the rider roll 17 and the rider roll beam 18 are located at lowermost position contacting winding cores, around which the customer rolls 15 are to be wound, for above and as the winding progresses and diameters of the customer rolls 15 increase the rider roll 17 and the rider roll beam 18 are moved correspondingly upwards contacting the outer circumferential surface of the customer rolls 15. When a set change is performed in the winder 10 the rider roll 17 and the rider roll beam 18 are moved to an uppermost position, not to be in the way of the set change devices. The winder 10 alco comprises a diameter profile measuring device 20 for measuring diameter profiles of sets of customer rolls 15 to be wound in the winder 10. For the measuring device 20 a linear guide 21 (fig. 2) is arranged in connection with the rider roll beam 18 on a longitudinal side thereof, along which linear guide the measuring device 20 is arranged movable in cross-direction of the winder 10, i.e. in longitudinal direction of the rider roll beam 18. Thus, the measuring device 20 is traversing. The measuring device 20 comprises a laser sensor for measuring the diameter profile of the sets of the customer rolls 15 wound in the winder 10. The measuring device 20 is thus arranged movable over the cross-direction of the winder 10 i.e. over the longitudinal direction of the set of the customer rolls 15. Thus, the measuring device 20 is configured to have a traverse measurement movement in cross-direction of the winder, during which movement the diameter profile of the set of the customer rolls 15 is measured. The measurement movement is performed advantageously, when the winder 10 is slowed down, example for the set change and/or when the winder 10 is stopped, for example for the set change. During winding the measurement might not give accurate results as the customer rolls 15 may bounce during the winding, especially in case the diameter profile varies so much, that the rider roll 17 is not in contact with all the customer rolls 15 of the set wound. This measuring device 20 can also provide information of widths of the customer rolls 15 and of their positions on the winding drums 11, 12 and of gaps between adjacent customer rolls 15. The measurement information of the diameter profile of the set of the customer rolls 15 is transmitted to a slitter-winder control system 35 (fig. 4), which provides information at least to production line control unit 55 as back feed information of cross-directional profile of the full-width fiber web.

In figure 2 is shown an example of the diameter profile measuring system for the diameter profile measuring method in connection with a winder 10 (fig. 1) comprising two winding drums 11, 12 with a set of customer rolls 15 on the winding drums 11, 12. The rider roll beam 18 for supporting the rider roll 17 (fig. 1) for supporting the customer rolls 15 during the winding in the winder 10 from above comprises the linear guide 21 is arranged in connection with the rider roll beam 18 on a longitudinal side thereof, along which linear guide the measuring device 20 is arranged movable in cross-direction of the winder 10, i.e. in longitudinal direction of the rider roll beam 18.

In figure 3 is shown an example of the diameter profile measuring device 20 for the diameter profile measuring system. The measuring device 20 is arranged as a traversing measuring device 20 attached to the rider roll beam 18 (fig. 1, 2) of the respective two drum winder 10. Thus, the the rider roll beam 18 comprises the horizontal linear guide 21 on one longitudinal side thereof and to the horizontal linear guide 21 the traversing measuring device 20 is movably in the horizontal direction attached by a carrier 22. The traversing measuring device 20 comprises the measuring laser sensor 25 supported by the carrier 22 and configured to measure the distance from the surface of each of the customer rolls 15 (figs. 1, 2) in the set to provide diameter profile information of the diameters of the customer rolls of the set. The measuring laser sensor 25 is turnable via a turnable attachment arrangement 23 to the rider roll beam 18 and thus, the measuring laser sensor 25 is turnable from a diameter profile measuring position to a calibration measurement position and vice versa. The measuring laser sensor 25 is calibrated by measuring the position of the measurement laser sensor 25 in respect of position of at least one of the winding drums 11; 12 (figs. 1, 2) and calibrating the diameter profile measurement results on basis of this calibrating measurement result. Advantageously, for the calibration the position of the measurement laser sensor 25 is measured in respect of each of the winding drums 11, 12. Advantageously, for the calibration the position of the measurement laser sensor 25 is measured in respect of each of the winding drums 11, 12 for calibration the diameter profile measurement information received from the measurement laser sensor 25 advantageously in vertical and in machine direction (in the main running direction of the slitter-winder). Advantageously based on the calibrating measurement results a correction factor for a target diameter of a set of the customer rolls is defined. By providing the measurement laser sensor 25 of the measuring device 20 with turnable attachment arrangement 23 to the rider roll beam 18 the correction factor the diameter profile measurement of the measurement laser sensor 25 is calculated for reliable, calibrated diameter profile measurement information. The turnable attachment arrangement 23 can be arranged for example by a turning link or by an adjustable screw fastening. The measuring device 20 has a charging position with a charging device 27, in which the measuring device 20 is charged when needed. The measuring system further comprises an actuator 28 for moving the measurement device 20 on the linear guide 21. The measurement device 20 is arranged in data transmission connection with slitter-winder control system 35. The slitter-winder control system 35 may have a power source, such as a battery or it can be connected to a charging device.

In figure 4 is shown an example of the control system of the diameter profile measuring device 20 for the diameter profile measuring system and for the diameter profile measuring method. The control system comprises the slitter-winder control system 35 in data connection via a transmission unit 33 with the diameter profile measuring device 20. The slitter-winder control system 35 is a microprocessor or a computer. The measurement results obtained by the diameter profile measuring device 20 are transmitted to the slitter-winder control system 35 and by analysing the measurement results, the slitter-winder control system 35 can send data to the production line control unit 55 to provide control data relating to the diameter profile of the measured set of the customer rolls 15 (fig. 1) as back feed information relating to the cross-directional profile of the fiber web. The production line control unit 55 may provide control instructions for corrective operations and/or for informational purposes to the production line and/or the slitter-winder on basis of the diameter profile information. The control unit 55 of the production line may also provide process data for the slitter-winder control system 35. The diameter profile measurement information can also be saved to a memory device (not shown) and/or to a memory 353 of the slitter-winder control system 35 for later inspection. The slitter-winder control system 35 is in data connection, advantageously wirelessly, with the measurement device 20 via a transmission unit 33 for receiving calibration measurement results and diameter profile measurement information from the diameter profile measurement device 20. The slitter-winder control system 35 advantageously comprises a computer program 351, a processor 352 and a memory 353. Additionally, the slitter-winder control system 35 may also comprise a power supplier and a communicator. The slitter-winder control system 35 is configured to receive the calibration measurement results from the measuring device 20 and based on the calibration measurement results from the measuring device 20 calculate correction factor for the diameter measurement result and to define the diameter profile of a set of customer rolls 15 and variation of diameters of customer rolls 15 of a set. The slitter-winder control system 35 is configured to receive the measurement results from the measuring device 20 and based on the measurement results from the measuring device 20 and the calibration measurement date define the diameter profile of a set of customer rolls 15 and variation of diameters of customer rolls 15 of a set. The slitter-winder control system 35 control operations of the computer program 351, the processor 352, the memory 353, and additionally the possible the power supplier and the communicator. The processor 352 of the slitter-winder control system 35 is advantageously configured to perform at least data transmitting in regard of the measured diameter profile of a set of customer rolls 15 to the production line control unit 55 initiated by the computer program 351. The computer program 351 may comprise one or more computer programs. The processor 351 may comprise one or more processors. The memory 353 of the slitter-winder control system 35 is configured to store and to maintain data relating to the measurement results and transmitted from the measuring device 20 and/or to related information thereof. The data may be instructions, computer programs and/or data files. The memory 353 comprises one or more memories. The memory 353 is configured to store the computer program 351, which is configured to process the measurement result and based on the process to define the back feed information to be transmitted. The memory 353 may also be configured to store at least a communication application for operating (controlling) the communicator and a power supply application for operating the power supplier. The communicator of the slitter-winder control system 35 can be configured to at least send data to an auxiliary device or devices, either wirelessly or via wire, such as to a remote computer and/or to a laptop computer and/or to a smartphone. The slitter-winder control system 35 can also comprise a power supplier which comprises components that are configured to power the slitter-winder control system 35, such as a battery and a regulator for example.

In the description in the foregoing, although some functions have been described with reference to certain features, those functions may be performable by other features whether described or not. Although features have been described with reference to certain embodiments or examples, those features may also be present in other embodiments or examples whether described or not. Above the invention has been described by referring to some advantageous examples only to which the invention is not to be narrowly limited. Many modifications and alterations are possible within the invention as defined in the following claims.

## Claims

1. Winder with a diameter profile measuring system, which winder (10) is a winder (10) of a slitter-winder and configured to wind customer rolls (15) as sets of customer rolls (15), which winder (10) comprises two winding drums (11, 12), on support of which the customer rolls (15) are configured to be wound, and a rider roll (17) supported by a rider roll beam (18), which rider roll (17) is configured to support the customer rolls (15) during winding thereof from above, and which rider roll (17) and rider roll beam (18) are arranged to be movable in vertical direction, **characterized in, that** the rider roll beam (18) comprises a linear guide located on its longitudinal side, that the diameter profile measuring system comprises a diameter profile measuring device (20) supported by a carriage (22), that the measuring device (20) is movably supported by the carriage (22) on the linear guide (21), that the diameter profile measuring device (20) comprises a measuring laser sensor (25) and that the measuring laser sensor (25) is turnably by a turnable attachment arrangement (23) attached to the carriage (22) for calibration measurement of the measuring laser sensor (25).

2. Winder with a diameter profile measuring system according to claim 1, **characterized in, that** the measuring device (20) has a measurement movement, in which the measuring device is configured to be moved on the linear guide (21) in cross-direction of the winder (10) and during which the measuring laser sensor (25) of the measuring device (20) is configured to measure distance to outer peripheral surface of the customer rolls to define the diameter profile of the set of the customer rolls (15) supported by the winding drums (11, 12).

3. Winder with a diameter profile measuring system according to claim 1 or 2, **characterized in, that** the diameter profile measurement information received from the measuring laser sensor (25) is configured to be calibrated on basis of a calibration distance measurement information of a distance to at least one of the winding drums (11, 12).

4. Winder with a diameter profile measuring system according to any of claims 1 - 3, **characterized in, that** the measuring system comprises an actuator (28) for moving the measuring device (20).

5. Winder with a diameter profile measuring system according to any of claims 1 - 4, **characterized in, that** the measuring system comprises a charging position with a charging device (27) for charging the measurement device (20).

6. Winder with a diameter profile measuring system according to any of claims 1 - 5, **characterized in, that** the measurement device (20) of the measuring system is in data transmission connection with a slitter-winder control system (35).

7. Winder with a diameter profile measuring system according to claim 6, **characterized in, that** the slitter-winder control system (35) is in data transmission connection with a production line control unit (55) of a fiber web production line, in connection of which the winder (10) is arranged, and configured to provide back feed information to the production line control unit (55) on basis of the measured diameter profile information received from the measuring device (20).

8. Winder with a diameter profile measuring system according to any of claims 1 - 7, **characterized in, that** the measuring device (20) is wireless.

9. Diameter profile measuring method for measurement of diameter profile of a set of customer rolls wound in a winder of a slitter-winder, in which winder (10) sets of customer rolls (15) are wound on support of winding drums (11, 12) of the winder (10), and in which winder (10) a set of customer rolls (15) is supported from above by a rider roll (17) supported by a rider roll beam (18), **characterized in, that** in the diameter profile measuring method a diameter profile is measured by a diameter profile measuring device (20) during measurement movement of the diameter profile measuring device (20) provided by a carriage (22) movably supported on a linear guide (21) arranged on one longitudinal side of the rider roll beam (18), that the diameter profile measuring device (20) measures the diameter profile of a set of customer rolls (15) by a measuring laser sensor (25), which is turnably by a turnable attachment arrangement (23) attached to the carriage (22) for calibration measurement of the measuring laser sensor (25).

10. Diameter profile measuring method according to claim 9, **characterized in, that** the diameter profile measuring is performed when the winder (10) is slowing down or stopped.

11. Diameter profile measuring method according to claim 9 or 10, **characterized in, that** the diameter profile measuring is performed when the winder (10) is for set change slowing down or stopped.

12. Diameter profile measuring method according to any of claims 9 - 11, **characterized in, that** the measuring laser sensor (25) is turned for the calibration distance measurement of measuring distance to at least one of the winding drums (11, 12) by the measuring laser sensor (25).

13. Diameter profile measuring method according to any of claims 9 - 12, **characterized in, that** in the method the measuring device (20) is charged in a charging position by a charging device (27).

14. Diameter profile measuring method according to any of claims 9 - 13, **characterized in, that** in the method the measurement result of the diameter profile measurement by the measuring device (20) is transmitted to a slitter-winder control system (35) for transmitting the measurement result as back feed information to a production line control unit (55) of a fiber web production line providing fiber web for the winder (10).
